# FASCICULE DE BREVET EUROPEEN

(11) **EP 1 995 126 B1**
(45) Date de publication et mention de la délivrance du brevet: **13.01.2010**
(21) Numéro de dépôt: 08305164.9
(22) Date de dépôt: 14.05.2008
(51) Int. Cl.: B60R 21/207

(54) **Dispositif pour le montage d'un ensemble à coussin gonflable de protection dans un siège arrière de véhicule automobile**
Vorrichtung zum Einbau eines Airbagsets im Rücksitz eines Kraftfahrzeugs
Device for mounting an assembly with an inflatable protective cushion in a rear seat of an automobile

(30) Priorité: 22.05.2007 FR 0755194
(43) Date de publication de la demande: 26.11.2008
(73) Titulaire: Peugeot Citroën Automobiles SA, 78140 Vélizy-Villacoublay (FR)
(72) Inventeur: Combeau, Frédéric, 25750 Desandans (FR)

(56) Documents cités:
- DE-A1- 4 305 295
- DE-A1- 19 845 992
- FR-A- 2 872 467
- FR-A- 2 888 804

## Description

La présente invention est relative à un dispositif pour le montage d'un ensemble à coussin gonflable, plus particulièrement dans l'assise d'un siège arrière de véhicule automobile, afin notamment de protéger le bassin et le cas échéant le torse de l'usager assis sur ce siège, lors d'un choc brutal survenant accidentellement sur ce véhicule.

FR 2 888 804. décrit un dispositif pour le montage dans l'assise d'un siège de véhicule automobile d'un ensemble à coussin gonflable comportant un sac expansible logé dans une enveloppe de confinement frangible, le sac étant relié à un générateur de gaz, l'assise comportant, d'une part un cadre rigide comprenant deux flasques latéraux, une traverse frontale en avant de l'assise et une garniture matelassée enveloppant le cadre, d'autre part un tube transversal de raidissement, prévu en avant du cadre et solidaire de celui-ci, l'un des flasques latéraux du cadre présentant un orifice, l'enveloppe de confinement du sac expansible s'adaptant, en prolongement transversal par rapport au générateur, contre le flasque sur le côté extérieur du cadre rigide, à l'aide de moyens de liaison amovibles, propres à immobiliser l'enveloppe vis-à-vis du cadre.

Dans certains véhicules automobiles modernes, en particulier du type dit monospace, où les sièges arrière sont escamotables, notamment lorsque l'agencement de l'habitacle permet de les retirer individuellement ou de les amener dans une cuvette de réception ménagée sous le plancher du véhicule afin de libérer l'espace correspondant, il est avantageusement prévu d'équiper ces sièges d'un ensemble à coussin gonflable ou « air bag », destiné à protéger l'occupant de ce siège en cas d'accident.

Cet ensemble à coussin gonflable comporte généralement un sac expansible en un matériau étanche, et un générateur de gaz associé, muni d'un opercule destiné à se briser à la suite d'un choc violent pour libérer immédiatement une grande quantité de ce gaz dans le sac, lequel, après rupture d'une enveloppe de confinement dans laquelle il est initialement replié, se détend instantanément en formant entre le corps et notamment le bassin de l'utilisateur et la paroi voisine de l'habitacle, voire le dossier d'un autre siège situé devant, une barrière souple de protection particulièrement efficace.

L'ensemble à coussin gonflable ainsi formé du sac expansible et du générateur de gaz, lequel se présente usuellement sous la forme d'une bouteille cylindrique allongée, raccordée par un orifice de communication avec le sac enfermé dans son enveloppe de confinement, est logé dans l'assise du siège, notamment dans un carter monté dans le cadre métallique qui appartient à l'armature rigide de ce siège à l'intérieur de la garniture matelassée qui entoure ce cadre et procure à l'usager le confort nécessaire.

Un tel carter doit donc présenter des dimensions relativement importantes pour permettre son montage dans l'assise et également des moyens qui assurent sa fixation sur l'armature, généralement constitués par des écrous ou autres organes d'immobilisation similaires.

Or, dans le cas où le siège arrière considéré présente une largeur limitée, en l'espèce de l'ordre de 440 mm, la place disponible pour monter le carter contenant l'ensemble à coussin gonflable n'est pas suffisante, en particulier lorsque cet ensemble présente une configuration classique où le générateur de gaz et l'enveloppe de confinement du sac expansible sont directement disposés en contact l'un avec l'autre ou dans leur voisinage immédiat, comme dans les solutions usuellement mises en oeuvre pour les coussins gonflables équipant d'autres zones du véhicule, notamment situées dans le moyeu du volant, le tableau de bord ou les montants latéraux de l'habitacle au droit des dossiers des sièges avant, voire dans ceux-ci directement.

La présente invention concerne un dispositif pour le montage d'un ensemble à coussin gonflable dans l'assise d'un siège arrière de véhicule automobile présentant un encombrement relativement réduit et notamment une relativement faible largeur, en permettant une mise en oeuvre simple, ne nécessitant aucun outillage particulier.

A cet effet, le dispositif considéré, pour le montage dans l'assise d'un siège arrière de véhicule automobile d'un ensemble à coussin gonflable comportant un sac expansible logé dans une enveloppe de confinement frangible, le sac étant relié à la sortie d'un générateur de gaz en forme de bouteille cylindrique par un opercule à rupture commandée par un choc brutal provoquant le déclenchement du coussin gonflable, l'assise comportant, d'une part un cadre rigide comprenant deux flasques latéraux, une traverse frontale en avant de l'assise et une structure métallique interne, élastique, de support d'une garniture matelassée enveloppant le cadre, d'autre part un tube transversal de raidissement, prévu en avant du cadre et solidaire de celui-ci, présente un orifice sur l'un des flasques latéraux du cadre pour l'engagement du générateur de gaz à l'intérieur de ce cadre sous et parallèlement au tube de raidissement, l'enveloppe de confinement du sac expansible s'adaptant, en prolongement transversal par rapport au générateur, contre le flasque sur le côté extérieur du cadre rigide, à l'aide de moyens de liaison amovibles, propres à immobiliser l'enveloppe vis-à-vis du cadre après engagement du générateur dans l'orifice du flasque latéral.

Selon une autre caractéristique, le générateur de gaz comporte un ergot en saillie externe, propre à coopérer avec une rampe de butée, ménagée au droit de l'orifice d'engagement de ce générateur, permettant d'assurer, par une rotation du type quart de tour, son verrouillage contre le flasque latéral du cadre rigide.

Avantageusement et dans un mode de réalisation préféré de l'invention, les moyens amovibles de liaison de l'enveloppe de confinement du sac expansible avec le flasque latéral du cadre rigide, comportent une pluralité de clips de fixation, propres à venir en prise avec le flasque latéral.

Selon une autre caractéristique, le générateur de gaz est supporté dans l'assise à l'aide de colliers fixés sur la traverse frontale et s'étendant à partir de celle-ci vers l'intérieur du cadre rigide.

Le cas échéant, les colliers sont disposés dans le prolongement de pieds de support du cadre rigide sur le plancher de l'habitacle du véhicule.

D'autres caractéristiques d'un dispositif pour le montage d'un ensemble à coussin gonflable dans l'armature de support d'un siège arrière de véhicule automobile, apparaîtront encore à travers la description qui suit d'un exemple de réalisation, donné à titre indicatif et non limitatif, en référence aux dessins annexés sur lesquels :
- La Figure 1 est une vue schématique en perspective de l'assise d'un siège arrière pour véhicule automobile, aménagée en vue du montage selon l'invention, d'un ensemble à coussin gonflable de protection.
- La Figure 2 est une vue en perspective de l'ensemble à coussin gonflable, prêt à être monté dans l'assise de siège illustrée sur la Figure 1.
- La Figure 3 est une vue de détail de l'ensemble à coussin gonflable et notamment de l'enveloppe de confinement du sac expansible au cours de son montage dans l'assise de siège.
- La Figure 4 est une autre vue de détail, à plus grande échelle, des moyens de verrouillage de l'ensemble à coussin gonflable sur l'assise du siège.

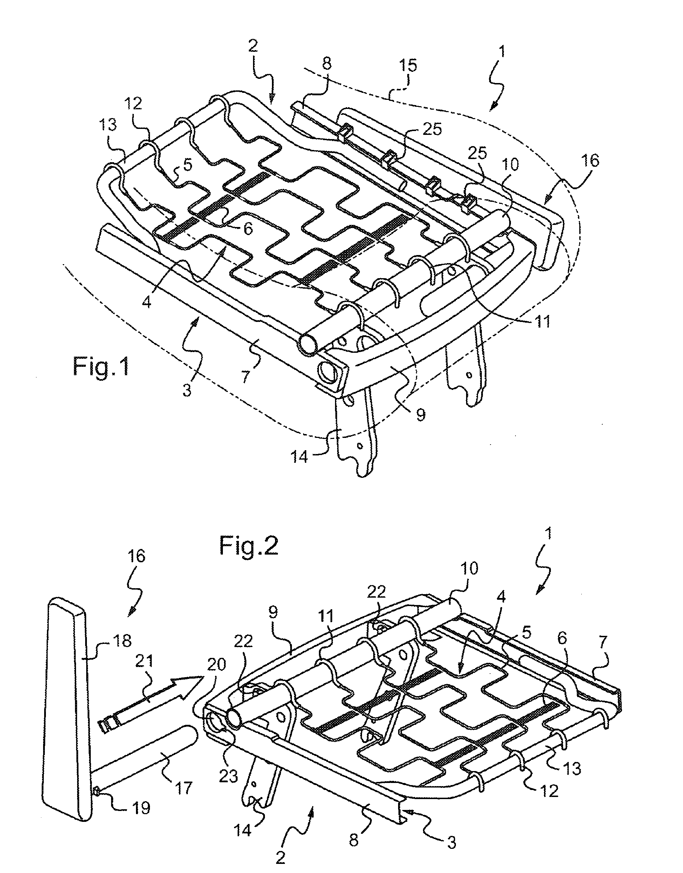

Sur la Figure 1, la référence 1 désigne dans son ensemble une assise pour siège arrière de véhicule automobile, comportant principalement une armature rigide 2 constituée d'un cadre 3 et d'une structure interne élastique 4, montée à l'intérieur de ce cadre et formée d'un treillis de fils métalliques 5 convenablement conformés, s'étendant selon la direction longitudinale du cadre 3 et reliés entre eux par des bandes de liaison transversales 6, en matière plastique ou analogue.

Le cadre 3 est principalement constitué de deux flasques 7 et 8, parallèles entre eux et s'étendant selon les côtés latéraux de ce cadre, en étant réunis à l'avant de ce dernier par une traverse frontale 9.

Le cadre 3 comporte par ailleurs, au voisinage de la traverse 9, un tube de raidissement 10, porté par les deux flasques latéraux 7 et 8, le treillis des fils 5 formant la structure interne 4 étant réuni à ce tube par des crochets de liaison 11.

A leur extrémité opposée, les fils 5 comportent des crochets similaires 12 en prise avec une barre de fixation 13, solidarisée des flasques 7 et 8 et s'étendant parallèlement à la barre de raidissement 10 disposée à proximité de la traverse frontale 9.

L'armature 2 de l'assise 1 est reliée à un dossier (non représenté), avantageusement articulé à l'arrière du cadre rigide 3, celui-ci comportant des pieds d'appui 14 sur le plancher de l'habitacle (également non représenté), l'ensemble du siège comprenant une garniture matelassée 15 entourant l'assise et le dossier du siège, pour conférer à l'usager de ce dernier le confort nécessaire.

Conformément à l'invention, l'assise 1 du siège est munie d'un ensemble à coussin gonflable 16, apte à être monté sur le cadre, entre la traverse frontale 9 et la barre de raidissement 10 sous cette dernière dans l'espace étroit délimité entre ces deux parties de l'armature, cet ensemble 16 étant muni de moyens d'immobilisation sur l'assise une fois son montage réalisé comme indiqué ci-après.

Comme représenté sur la Figure 2, l'ensemble à coussin gonflable 16 se compose principalement d'un générateur de gaz 17, en forme de bouteille cylindrique allongée, comportant un opercule interne (non représenté et dont le détail de la réalisation n'importe directement à l'invention), cet opercule étant susceptible de se rompre en cas de choc brutal et violent se produisant sur le véhicule afin de libérer le coussin pour assurer la protection du bassin et également du torse de l'usager assis sur le siège, notamment vis-à-vis des parois latérales de l'habitacle voisines de ce siège, le cas échéant du dossier du siège avant situé devant lui.

Le générateur de gaz 17 est relié à un sac expansible susceptible de se gonfler brutalement une fois l'opercule rompu dans les conditions ainsi précisées, ce sac expansible étant logé dans une enveloppe de confinement frangible 18, apte à se déchirer instantanément dès que le gaz provenant du générateur est libéré à l'intérieur du sac en permettant le gonflage immédiat de celui-ci.

L'enveloppe de confinement 18 présente de préférence une forme plate et allongée, le générateur de gaz 17 s'étendant dans une direction sensiblement perpendiculaire au plan de cette enveloppe. Ce générateur 17 comporte par ailleurs un ergot en saillie externe 19, dont le rôle sera explicité ci-après.

Pour assurer le montage de l'ensemble à coussin gonflable 16 à l'intérieur et contre le cadre rigide 3 de l'assise 2 du siège, on prévoit, conformément à l'invention, de ménager dans l'un au moins des flasques latéraux de ce cadre, en l'espèce le flasque 8 mais le cas échéant dans l'un et l'autre des flasques 7 et 8,comme schématisé sur la Figure 1, un orifice de passage 20 dont le diamètre est déterminé de telle sorte qu'il permette le libre engagement à travers celui-ci de la bouteille cylindrique formant le générateur de gaz 17, selon le sens de la flèche 21 (Figure 2), celui-ci venant ainsi se disposer à l'intérieur du cadre contre la traverse frontale 9 et directement sous la barre de raidissement 10.

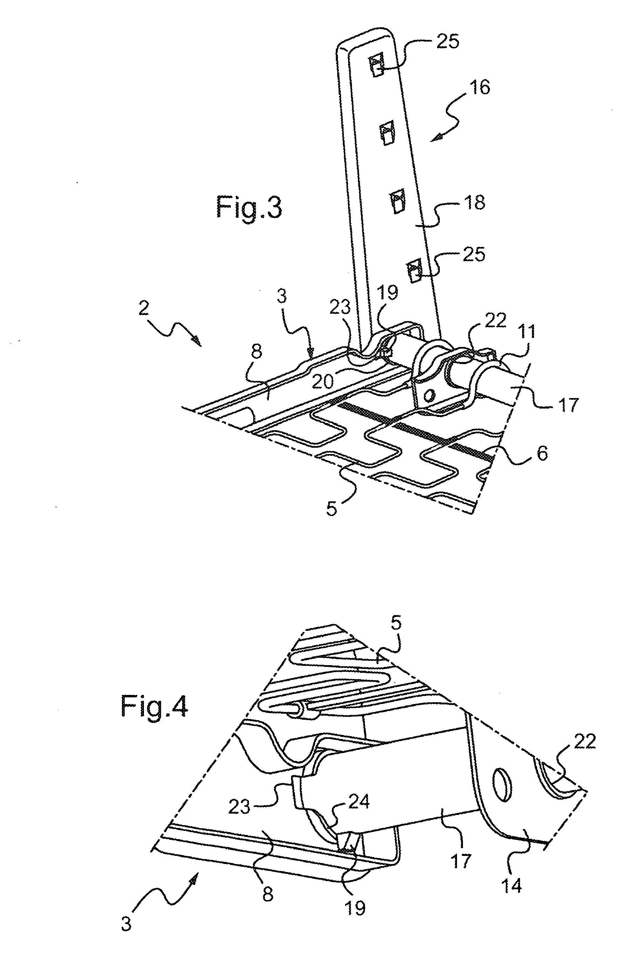

Avantageusement, les pieds d'appui 14, prévus sous l'armature 2 de l'assise 1, sont convenablement coudés à l'intérieur de celle-ci pour venir se solidariser de la face interne de la traverse frontale 9 et forment des colliers 22 dans lesquels s'engage le générateur 17 (Figure 3) qui est ainsi supporté en divers endroits de sa longueur par cette traverse.

L'orifice de passage 20 prévu dans le flasque latéral 8 pour le passage du générateur 17, comporte dans sa périphérie une gorge 23, permettant à l'ergot en saillie 19 prévu sur ce générateur de traverser librement cet orifice, cet ergot coopérant, au-delà de ce dernier, avec une rampe de butée 24 ménagée au droit de cet orifice dans la surface du flasque 8, dirigée vers l'intérieur du cadre rigide 3.

La rampe de butée 24 présente un profil incliné (Figure 4), de telle sorte que l'ergot 19, une fois amené à l'intérieur du cadre 3 au-delà de l'orifice de passage 20, puisse se déplacer consécutivement à un pivotement de l'ensemble à sac gonflable 16 avec une amplitude de l'ordre de 90°, le long de cette rampe, en assurant un appui croissant de l'enveloppe de confinement 18 de cet ensemble contre la surface externe du flasque 8 et, en fin de course, son blocage en position.

Avantageusement, l'enveloppe de confinement 18 contenant le sac expansible, comporte une série de crochets 25, formant clips d'accrochage et de butée, ces clips venant en prise sur le dessus du flasque latéral 8 du cadre 3 à la fin du mouvement de pivotement de l'ensemble 16 par rapport au cadre autour de l'axe du générateur 17 (voir Figures 1 et 3), pour l'immobiliser sur ce flasque et sur l'assise 1.

On réalise ainsi un dispositif de montage d'un ensemble à coussin gonflable de protection dans l'armature de support qui forme l'assise d'un siège arrière de véhicule automobile dans des conditions telles que cet ensemble puisse se loger dans et sur le côté immédiat de cette armature, le générateur de gaz n'occupant que l'espace réduit disponible à l'avant de cette armature entre la traverse frontale qui délimite le cadre rigide de cette dernière et une barre de raidissement prévue parallèlement à cette traverse, tandis que l'enveloppe de confinement du sac expansible, reliée au générateur, se dispose en contact étroit avec un des flasques latéraux de ce cadre et se verrouille sur celui-ci.

Le montage de cet ensemble est particulièrement simple, n'exigeant, une fois le générateur engagé à l'intérieur du cadre, qu'un pivotement de l'enveloppe de confinement autour de l'axe de ce générateur pour l'amener contre le flasque latéral, ce mouvement qui ne nécessite aucun outillage particulier, permettant en fin de course d'assurer l'immobilisation et le blocage de l'ensemble vis-à-vis de l'assise du siège. Un mouvement inverse permet tout aussi aisément de libérer l'ensemble et de le désolidariser du cadre rigide, pour remplacement après usage, entretien ou réparation.

Lorsque l'ensemble coussin gonflable est ainsi agencé et mis en place, il n'est jamais en contact avec l'occupant du siège, ce qui présente un autre avantage particulièrement important.

Bien entendu, il va de soi que l'invention ne se limite pas à l'exemple de réalisation plus spécialement décrit et représenté en référence aux dessins annexés ; elle en embrasse au contraire toutes les variantes.

## Revendications

1. Dispositif pour le montage dans l'assise (1) d'un siège arrière de véhicule automobile d'un ensemble à coussin gonflable (16) comportant un sac expansible logé dans une enveloppe de confinement frangible (18), le sac étant relié à un générateur de gaz (17) en forme de bouteille cylindrique par un opercule à rupture commandée par un choc brutal de déclenchement du coussin gonflable, l'assise comportant, d'une part un cadre rigide (3) comprenant deux flasques latéraux (7,8), une traverse frontale (9) en avant de l'assise et une structure métallique interne (4), élastique, de support d'une garniture matelassée (15) enveloppant le cadre (3), d'autre part un tube transversal de raidissement (10), prévu en avant du cadre et solidaire de celui-ci, l'un (8) des flasques latéraux du cadre présentant un orifice (20) pour l'engagement du générateur de gaz (17) à l'intérieur de ce cadre (3) sous et parallèlement au tube de raidissement (10), l'enveloppe de confinement (18) du sac expansible s'adaptant, en prolongement transversal par rapport au générateur (17), contre le flasque (8) sur le côté extérieur du cadre rigide (3), à l'aide de moyens de liaison amovibles (25), propres à immobiliser l'enveloppe (18) vis-à-vis du cadre (3) après engagement du générateur (17) dans l'orifice (20) du flasque latéral (8).

2. Dispositif selon la revendication 1, **caractérisé en ce que** le générateur de gaz (17) comporte un ergot en saillie (19) externe, propre à coopérer avec une rampe de butée (24) ménagée au droit de l'orifice (20) d'engagement de ce générateur, permettant d'assurer, par une rotation du type quart de tour, son verrouillage contre le flasque latéral (8) du cadre rigide (3).

3. Dispositif selon l'une des revendications 1 ou 2, **caractérisé en ce que** les moyens amovibles de liaison de l'enveloppe de confinement (18) du sac expansible avec le flasque latéral (8) du cadre rigide (3), comportent une pluralité de clips de fixation (25), propres à venir en prise avec le flasque latéral.

4. Dispositif selon l'une quelconque des revendications 1 à 3, **caractérisé en ce que** le générateur de gaz (17) est supporté dans l'assise (1) à l'aide de colliers (22) fixés sur la traverse frontale (9) et s'étendant à partir de celle-ci vers l'intérieur du cadre rigide (3).

5. Dispositif selon la revendication 4, **caractérisé en ce que** les colliers (22) sont disposés dans le prolongement de pieds de support (14) du cadre rigide (3) sur le plancher de l'habitacle du véhicule.

## Claims

1. Device for installing an airbag assembly (16) in the seat base (1) of a rear seat in a motor vehicle, consisting of an expandable bag disposed in a frangible containment system (18), the bag being connected to a gas generator (17) in the form of a cylindrical bottle by a rupture disc that is actuated by a heavy impact triggering the airbag, the seat base including both a rigid frame (3) including two lateral flanges (7, 8), a frontal crosspiece (9) at the front of the seat base, and an internal metallic structure (4), elastic, for supporting a padded trim (15) surrounding the frame (3), and a transverse reinforcing tube (10) provided in from of the frame and attached thereto, one (8) of the lateral flanges of the frame being furnished with an orifice (20) for attaching the gas generator (17) inside this frame (3) below and parallel to the reinforcing tube (10), the containment system (18) of the expandable bag being adjustable transversally relative to the generator (17), against the flange (8) on the outer side of the rigid frame (3), via movable connecting means (25) that are capable of immobilising the containment system (18) with respect to the frame (3) after the generator (17) has been seated in the orifice (20) of the lateral flange (8).

2. The device as recited in claim 1, **characterized in that** the gas generator (17) includes an external protruding lug (19) that is able to cooperate with an abutment ramp (24) disposed level with the orifice (20) for attaching this generator, enabling it to be locked against the lateral flange (8) of the rigid frame (3) by turning it through a quarter revolution.

3. The device as recited in either of claims 1 or 2, **characterized in that** the movable means for connections the containment system (18) of the expandable bag to the lateral flange (8) of the rigid frame (3) include a plurality of mounting clips (25) that are designed to engage with the lateral flange.

4. The device as recited in any of claims 1 to 3, **characterized in that** gas generator (17) is supported inside the seat base (1) by collars (22) that are attached to the front crosspiece (9) and extend from there into the interior of the rigid frame (3).

5. The device as recited in claim 4, **characterized in that** the collars (22) are situated in the extension of support feet (14) of the rigid frame (3) on the floor of the vehicle passenger compartment.

## Patentansprüche

1. Vorrichtung zur Montage einer Einheit mit aufblasbarem Kissen (16) in der Sitzfläche (1) eines Kraftfahrzeugrücksitzes, die einen dehnbaren Sack aufweist, der in einem splitterbaren Einschlussmantel (18) untergebracht ist, wobei der Sack mit einem Gasgenerator (17) in Form einer zylindrischen Flasche durch einen Verschlussdeckel mit gesteuertem Bruch, der von einem plötzlichen Stoß zum Auslösen des aufblasbaren Kissens gesteuert ist, verbunden ist, wobei die Sitzfläche einerseits einen starren Rahmen (3) aufweist, der zwei seitliche Flansche (7, 8), einen vorderen Querbalken (9) an der Vorderseite der Sitzfläche und eine interne Metallstruktur (4) aufweist, die elastisch ist, um eine Polsterfüllung (15) zu stützen, die den Rahmen (3) umhüllt, andererseits ein Versteifungsquerrohr (10), das an der Vorderseite des Rahmens vorgesehen und fest mit diesem verbunden ist, aufweist, wobei einer (8) der seitlichen Flansche des Rahmens eine Öffnung (20) für das Einfügen des Gasgenerators (17) in das Innere dieses Rahmens (3) unter und parallel zu dem Versteifungsrohr (10) aufweist, wobei sich der Einschlussmantel (18) des dehnbaren Sacks in Querverlängerung in Bezug zu dem Generator (17) gegen den Flansch (8) auf der Außenseite des starren Rahmens (3) mit Hilfe abnehmbarer Verbindungsmittel (25) anpasst, die den Mantel (18) in Bezug auf den Rahmen (3) nach dem Einfügen des Generators (17) in die Öffnung (20) des seitlichen Flanschs (8) feststellen können.

2. Vorrichtung nach Anspruch 1, **dadurch gekennzeichnet, dass** der Gasgenerator (17) einen externen vorstehenden Dorn (19) aufweist, der mit einer Anschlagrampe (24), die im rechten Winkel zu der Öffnung (20) zum Einfügen dieses Generators eingerichtet ist, zusammenwirken kann und es erlaubt, ihn durch eine Drehung des Typs Vierteldrehung gegen den seitlichen Flansch (8) des starren Rahmens (3) zu verriegeln.

3. Vorrichtung nach einem der Ansprüche 1 oder 2, **dadurch gekennzeichnet, dass** die abnehmbaren Verbindungsmittel des Einschlussmantels (18) des dehnbaren Sacks mit dem seitlichen Flansch (8) des Rahmens (3) mehrere Befestigungsclips (25) aufweisen, die mit dem seitlichen Flansch zum Eingreifen kommen können.

4. Vorrichtung nach einem der Ansprüche 1 bis 3, **dadurch gekennzeichnet, dass** der Gasgenerator (17) in der Sitzfläche (1) mit Hilfe von Schellen (22), die auf dem vorderen Querbalken (9) befestigt sind und sich ausgehend von diesem zum Inneren des starren Rahmens (3) erstrecken, getragen wird.

5. Vorrichtung nach Anspruch 4, **dadurch gekennzeichnet, dass** die Schellen (22) in der Verlängerung von Stützfüßen (14) des starren Rahmens (3) auf dem Boden der Fahrgastzelle des Fahrzeugs angeordnet sind.
